# EUROPEAN PATENT SPECIFICATION

(11) **EP 3 837 109 B1**
(45) Date of publication and mention of the grant of the patent: **19.07.2023**
(21) Application number: 18936050.6
(22) Date of filing: 04.10.2018
(51) Int. Cl.: B29C 70/20, B29C 70/22, B29C 70/50, B29B 15/10, C08J 5/04, C08J 5/24

(54) **SEMI -FINISHED COMPOSITE MATERIALS CONTAINING NATURAL FIBERS AND PRODUCTION THEREOF**
HALBFERTIGE VERBUNDWERKSTOFFE MIT NATURFASERN UND HERSTELLUNG DAVON
MATÉRIAUX COMPOSITES SEMI-FINIS CONTENANT DES FIBRES NATURELLES ET LEUR PRODUCTION

(43) Date of publication of application: 23.06.2021
(73) Proprietor: B Preg Kompozit Ve Tekstil Muhendislik Danismanlik Sanayi Ticaret Anonim Sirketi, Bornova/Izmir (TR)
(72) Inventor: UGURAL, Burcu Karaca, Bornova/Izmir (TR)
(74) Representative: Yalçiner Patent and Consulting Ltd.
(86) International application number: PCT/TR2018/050551
(87) International publication number: WO 2020/072009

(56) References cited:
- EP-A1- 2 514 584
- EP-A2- 0 630 735
- WO-A1-2005/033393
- WO-A1-2009/131148
- WO-A2-2011/163365
- US-A- 5 401 154
- US-A1- 2013 207 307
- US-A1- 2014 287 216

## Description

### Technical Field

The invention comprises thermoplastic unidirectional prepreg structures containing reciprocal surfaces, wherein one surface includes uni-directionally oriented natural fibers and the other surface includes randomly oriented natural fibers, and the production of these structures in one step.

### Known State of the Art (Prior Art)

Prepreg, which is the abbreviation for the term pre-impregnated, is produced by impregnating the matrix polymer intoreinforcing fibers and forming a semi-finished composite material ready to be molded. Laminated composite materials are produced by assembling prepreg structures in various stacking sequences whereas sandwich composite materials are produced by assembling prepreg structures with felt (nonwoven- mat form), foam and/or honeycomb structures.

The reinforcing fibers in the prepreg structures can be in various forms such as ribbon, cord, yarn, felt (nonwoven, mat), woven-knitted-non-crimp or unidirectional (UD) fabrics, while thermoset or thermoplastic polymer is used as the matrix.

Unidirectional prepreg structures in which the reinforcing fibers are aligned in one direction have been the most preferred structures in recent years as they offer unlimited design possibilities in the production of laminated and/or sandwich composite materials.

In the production of unidirectional prepreg structures; carbon, aramid, and glass fibers are mostly preferred as the reinforcing fibers and thermoset polymers as the matrix. However, thermoplastic prepregs have preferred in recent years in terms of sustainable production, recycling and re-use.

Unidirectional thermoplastic prepreg structures are manufactured as a result of merging the reinforcing fibers, that are continuously aligned in one direction within a certain width through the production line, with thermoplastic polymer in various forms (powder, fibers, textile structures, film or melt) under a certain temperature and pressure.

On unidirectional thermoplastic prepreg structures; carbon, aramid and glass fibers produced as multifilament and/or tape form with an infinite length can directly be used; whereas natural fibers with a limited length due to their nature cannot be used directly. Natural fibers are first required to be brought into a form which provides uninterruptedly directed layout in one direction. The literature includes two different textile structures which provide alignment of natural fibers in single direction as parallel to each other:
1- Card web,
2- Woven structures named as unidirectional and/or non-crimp fabrics

In the known state of the art, one of these two structures is used for the production of unidirectional thermoplastic prepreg structures in which natural fibers oriented in single direction are merged with thermoplastic polymer in the form of powder, fibers, textile structure, film or meltunder certain temperatures and pressure.

The card web is obtained by separating the bundles of natural fibers from each other with various opening and combing methods, and making them parallel to each other. In the case of using the card web, the natural fibers brought side by side in parallel to each other after the opening and combing process is not stable, which causes problems during its handling or transfer along the prepreg production line. Therefore, special solutions and/or emulsions and/or adhesives are used for fixing the card web form. It requires applying additional chemical processes and additional drying steps to the prepreg production process and therefore results in an extra cost. Furthermore, as the unidirectional prepreg structures on which natural fibers are used in the web form are very thin, when it is exposed to a vertical force along the fiber during prepreg production, the space between the side by side fibers opens and various tearing problems are experienced.

The European patent numbered EP 2 776 617 B1, defines a surface, (web) thinner than 1 mm, under 500 g/m² (preferably) 150 g/m²) which comprises multiple ribbons of natural and synthetic fibers having at least 50% flax fiber with a length of at least 20 cm (preferably 50 cm) that are arranged parallel to each other with a certain tightness by passing between couples of rollers with different rotation speeds after being extended in a pinned area, and dried subsequent to bonding with a solution or foam that contains water and a non-ionic surfactant such as polyvinyl alcohol, and the method of production thereof.

The German patent application numbered DE4242538 A1 describes creating and shaping the textile structure (generally nonwoven, mat form) of natural fibers, by impregnating it with an aqueous solution which contains a softener and a wetting agent, and with vapor, thus activating the pectin in it, and enabling it to act like a natural bonding agent, and evaporating the solution with heat (with calendering process in general).

The European patent numbered EP2514584 A1 discloses a bundle of roving yarns, method of manufacturing a bundle of roving yarns and method for manufacturing a work piece. In said document, a method of manufacturing a bundle of roving yarns is described. The method is characterised in assembling a number of roving yarns of longitudinal unidirectional fibres and an additional component in a bundle. For example, at least one resin distribution means or a thermoplastic material can be placed as the additional component in the bundle.

In order to obtain unidirectional natural fiber-reinforced thermoplastic prepreg structures, instead of a web form which is not a stable structure, a yarn form which is a stable structure can also be used as the reinforcing material. In general, various yarn structures are woven and turned into fabric structure, and use of the fabric structure is preferred during prepreg production. The content of the yarns used for weaving may just be natural fibers or it may also be obtained by mixing natural fiber with the fiber form of thermoplastic matrix polymer in various ratios.

In the case that the fabrics named as unidirectional and/or non-crimp is used, the weaving process is added to the prepreg production process and it increases the production steps and consequently the production cost. Furthermore, natural fibers are required to be turned intoyarn form first, to produce a fabric. In addition, in order to ensure that the yarns to be woven show sufficient resistance against the mechanical factors that they would be exposed to during weaving, the yarn twist amount (the number of rotation of the yarn around itself per meter, tour per meter) is required to be maintained high. In the case that the amount of yarn twist is maintained high, it prevents directing the natural fibers in the yarn parallel to the axis of the composite material, and makes it difficult for the thermoplastic polymer that creates the matrix to penetrate through the fiber in the yarn.

In the prior art; glass, carbon or aramid fibers produced in infinite length of filament or ribbon forms are arranged side by side or turned into any textile structure and passed through thermoset resins, impregnated with resin and the composite material occurs when the resin cures and solidifies.

Since the viscosity of thermoplastic polymer is high, the production of thermoplastic composite cannot be carried out with the impregnation of the reinforcing fibers passing through the liquefied thermoplastic contrary to thermoset resin. The commonly used technique is merging the reinforcing fibers or any textile structure made of the fibers with film/folio form of thermoplastic under hot press. The most commonly used two methods in the production of unidirectional prepreg thermoplastic structures are:
- Fixation of the reinforcing fibers that are aligned parallel to each other through one direction in the form of bundles, ribbons or yarns via either processing with a solution and/or an emulsion containing various chemicals or stitching them into textile surface and then merging the fixed web structure with thermoplastic film under hot press or,
- weaving the fabric structures in which the reinforcing fibers are used as weft yarns and the thermoplastic polymer is used as warp yarns, or the reinforcing fibers are used as warp yarns and the thermoplastic polymer is used as weft yarns and then melting the thermoplastic polymer used as warp or weft yarns in the fabric structure under hot press and let the molten polymer wrap around the unidirectionally aligned reinforcing fibers.

At present, the production of the textile surfaces like felt (nonwoven, mat) structure in which the natural fibers are randomly aligned, is carried out by fixation of the scattered natural fibers via needle punching.

Obtaining unidirectional thermoplastic prepreg structures containing reciprocal surfaces/faces, wherein one surface includes uni-directionally oriented natural fibers and the other surface includes randomly oriented natural fibers in the prior art's methods can be realized in three steps;
i. production of natural fiber reinforced unidirectional thermoplastic prepreg structures,
ii. production of the felt, nonwoven, mat structure in which the natural fibers are randomly oriented, by the needle punching method,
iii. bonding the natural fiber reinforced unidirectional thermoplastic prepreg structures, and the felt, nonwoven, mat structure in which the natural fibers are randomly oriented by means of heat treatment and/or various adhesives.

### Brief Description and Objectives of the Invention

Said invention is related with unidirectional thermoplastic prepreg structures containing reciprocal surfaces, wherein one surface includes uni-directionally oriented natural fibers and the other surface includes randomly oriented natural fibers and their methods of production in one step. With simultaneous manufacturing of the natural fiber containing surfaces in which one has unidirectionally oriented natural fibers and the other has randomly oriented natural fibers as well without including the conventional methods used in the prior art, unidirectional thermoplastic prepreg structures containing reciprocal surfaces, wherein one surface includes uni-directionally oriented natural fibers and the other surface includes randomly oriented natural fibers are obtained.

During the production of natural fiber reinforced unidirectional prepreg structures with the invented product and method, the natural fibers are directed in one direction without requiring to use the natural fibers in a card web form, and without requiring the additional chemical processes for the fixation of the card web and/or without requiring to use the natural fibers in non-crimp fabric form, and without necessitating the related additional weaving and/or stitching process of the prior art.

The invented product and method eliminate the need for using extra thermoplastic film or various textile forms of thermoplastic polymer at the top or bottom surface of the reinforcing fibers during the production of natural fiber-reinforced unidirectional prepreg structures.

The invented method eliminates the need for nonwoven, mat, felt production via needle punching method when creating the surface on which the natural fiber is randomly oriented.

The advantages of obtaining unidirectional thermoplastic prepreg structures containing reciprocal surfaces, wherein one surface includes uni-directionally oriented natural fibers and the other surface includes randomly oriented natural fibers with the invention are listed as follows.
- any additional chemical process is not required for the fixation of the fibers as cardweb is not used,
- stitching or weaving process is not applied in forming a surface with a certain width from the natural fibers containing yarns
- extra thermoplastic film is not required anymore during prepreg production due to the use of special-design yarns
- nonwoven, mat, felt production via needle punching method is not required when obtaining the surface on which natural fibers are randomly oriented
- as the production of the surfaces on which natural fibers are directed respectively in one direction and randomly is realized simultaneously within the same production line; the production of the unidirectional thermoplastic prepreg structures containing reciprocal surfaces/faces, wherein one surface includes uni-directionally oriented natural fibers and the other surface includes randomly oriented natural fibers is carried out in one step
- as one surface of the natural fiber-reinforced unidirectional prepreg structure also includes randomly oriented fibers, the potential tearing problem of the prepreg structure when exposed to vertical force during production and use is also eliminated.

### Definition of the Figures Describing the Invention

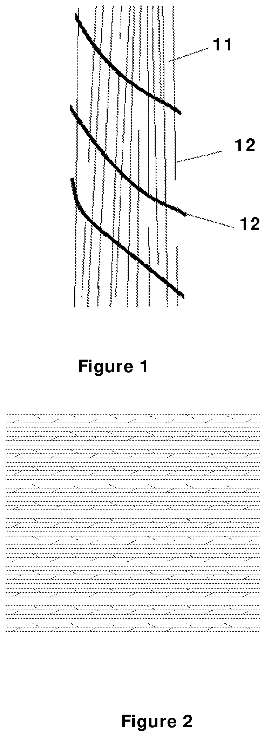

**Figure 1****:**Yarn structure.
**Figure 2****:**Unidirectional thermoplastic prepreg structure that contains natural fiber directed unidirectionally on one surface and randomly scattered on the other surface.

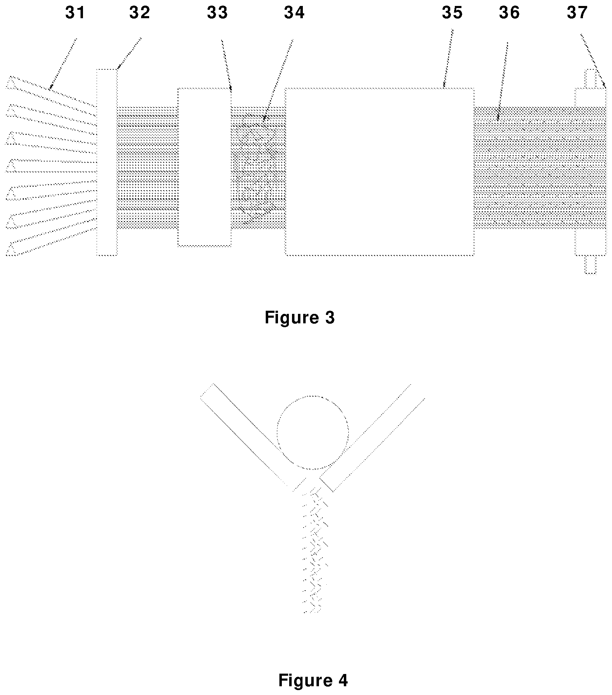

**Figure 3****:**Top elevation of the production line.
**Figure 4****:** Right elevation of the fiber spattering hopper.

### Definitions of the elements/sections/components which form the invention

- 11-: Natural fibers
- 12-: Thermoplastic fibers
- 31-: Yarn
- 32-: Yarn arrangement system
- 33-: Fiber spattering
- 34-: Spattered and directed fibers
- 35-: Heating and press
- 36-: Prepreg
- 37-: Coil winder

### Detailed Description of the Invention

With the simultaneous production of the surfaces on which the natural fibers are unidirectionally and randomly oriented as a result of the method and product of said invention; the unidirectional thermoplastic prepreg structures containing reciprocal surfaces, wherein one surface includes uni-directionally oriented natural fibers and the other surface includes randomly oriented natural fibers are obtained in one-step production. With the side-by-side arrangement of the special design yarns in the invention without any spacing in-between, the surface on which the natural fibers are oriented in one direction is obtained, while random spattering of the natural fibers and/or the natural fibers and powder and/or filament thermoplastic polymer on the surface that consists of special design yarns arranged side by side without any space creates the surface on which the natural fibers are randomly oriented simultaneously on the surface on which the natural fibers are unidirectionally directed, and after the special design yarns arranged side by side without spacing along the production line pass through hot rollers and/or IR Heaters such as hot plates and/or calender; as a result of melting thermoplastic polymers presented in both special-design yarns and randomly scattered fibers on the surface that consists of yarns, the unidirectional thermoplastic prepreg structures containing reciprocal surfaces/faces, wherein one surface includes uni-directionally oriented natural fibers and the other surface includes randomly oriented natural fibers are obtained in one-step production without stitching and/or weaving and needle punching processes.

The special-design yarn used for the invention has a structure in which the untwisted ribbon form of reinforcing natural fibers positioned in parallel, and the multifilament form of the thermoplastic polymer to create the matrix are located in the center of the yarn, and they are wrapped and reinforced with the thermoplastic polymer which is to create the matrix in multifilament form.

In the prior art, the conventional yarns that contain natural fibers required twisting the natural fibers to ensure the yarn resistance required for the weaving process and to ensure bonding of the natural fibers with limited length to each other in a manner to form a continuous flow. However, as the twisting process causes a natural fibers to form a tight structure with each other, when the thermoplastic polymer with already a high viscosity during the production of composite material reaches the melting temperature, it makes penetration into the tight yarn structure difficult, and has a negative impact on the mechanical properties of the composite material. In the prior art, the yarn cannot be produced without twisting the natural fibers having limited length; first the natural fibers are turned into a yarn form by twisting (spun yarn, twisted yarn) and then it is wrapped with a multifilament or ribbon form of thermoplastic polymer.

Natural fibers in special design yarns of the invention are used in ribbon form without twisting. The multifilament form of thermoplastic polymer in the center of the yarn, enables the natural fibers to follow each other uninterruptedly without any breaks during the production of the yarn, and the multifilament form of thermoplastic polymer wrapping around the yarn prevents dissociation of the natural fibers that follow each other uninterruptedly. As a result, the twisting process that enables twisting of the fibers on each other to give the natural fibers an uninterrupted form becomes unnecessary. Furthermore, the presence of the multifilament form of thermoplastic polymer both in the yarn and around the yarn increases the contact surface between the reinforcing natural fibers and the thermoplastic polymer to create the matrix, which further facilitates penetration of the matrix polymer that reaches the melting point in to the reinforcing t natural fibers during prepreg production.

Furthermore, as the natural fiber-containing yarns will directly be used without weaving with the invented method,the twist required for the yarn design to avoid breaking of the yarn under the mechanical impact of the weaving process becomes unessential for special-design yarns.

In the prior art, stitching and/or weaving the yarns that contain natural fibers enables obtaining surfaces on which the natural fibers are directed in one direction. With the invented method, the surface with natural fibers directed in one direction is created by side by side arrangement of natural fibers containing special design yarns without spacing, thus the stitching and/or weaving process is eliminated. Side by side arrangement of special design yarns without spacing is provided by yarn feeders. By random spattering of the natural fibers and/or natural fibers and powder and/or fiber form of thermoplastic polymer on the surface that consists of side by side arranged special design yarns, the surface with randomly oriented natural fibers are also created simultaneously on the surface with the natural fibers directed in one direction. In the prior art, generally felting prosess via needle punching method is used to stabilize the randomly oriented form of the natural fibers and to transfer them from one place to another, within the invention randomly oriented form of the natural fibers are already carried by the surface generated by uninterrupted side by side arrangement of special design yarns and thus fixation of the randomly oriented form of the fibers is not required either and the felting process is eliminated.

The surface on which the natural fibers are oriented in one direction by arranging them side by side without spacing, advances between the yarn feeders and the coil former in the production flow, natural fibers and/or natural fibers and fiber and/or powder form of thermoplastic polymer are spattered on it with the fiber spattering unit. The nonwoven web is obtained without the felting process, in the form of a kind of thin structure by coating randomlyoriented natural fibers and/or natural fibers and powder and/or filament form of thermoplastic polymer on top of the surface on which natural fibers are oriented in one direction by side by side arrangement of special design yarns without spacing. The surface with randomly oriented natural fibers, and the surface created by side-by-side arrangement of special design yarns without spacing and by orienting the natural fibers in one direction, pass through hot rollers and/or IR heaters such as hot plates and/or a calender before reaching the coil formers. Using an extra thermoplastic film/folio either under the surface with unidirectionally oriented natural fibers or on the surface with randomly directed natural fibers, which is created on top of the surface with unidirectionally oriented natural fibers before the heating process becomes unnecessary. During the heating process, as a result of melting of thermoplastic polymer presented in the special design yarns and in the structure of the nonwoven surface created on these yarns; the yarns which stand side by side without spacing merge with each other and while the surface on which the natural fibers are oriented in one direction is fixed, that surface and also the thin surface with randomly oriented natural fibers also bond each other. As a result, the unidirectional thermoplastic prepreg structures containing reciprocal surfaces/faces, wherein one surface includes uni-directionally oriented natural fibers and the other surface includes randomly oriented natural fibers are obtained in one-step production without stitching and/or weaving and felting processes and without requiring an extra thermoplastic film/folio.

In the invented production method, with the special design yarn structure the elimination of the twisting process in the production of yarns that contain natural fibers, excluding the stitching and weaving steps in the creation of the surface along which the natural fibers are oriented in one direction from natural fibers containing yarns , and excluding the felting process in the formation of the nonwoven web along which the natural fibers are randomly oriented, and elimination of an extra thermoplastic film/foil use to obtain prepreg structure to reduce the production steps, thus reduce the production cost and enable production of natural fiber reinforced unidirectional prepreg structures with higher mechanical performance.

The natural fibers randomly oriented on a natural fiber reinforced unidirectional prepreg surface eliminates the potential tearing problem which may happen in the prepreg structure when the prepreg structure is exposed to a vertical force during production and/or during industrial use after production.

The invented method includes the following process steps.
- arranging the special-design yarn, with a structure in which untwisted ribbon form of reinforcing natural fibers positioned in parallel, and the multifilament form of the thermoplastic polymer to create the matrix are located in the center of the yarn, and they are wrapped and reinforced with the thermoplastic polymer which is to create the matrix in multifilament form, side by side without leaving space between them, by means of the yarn feeder, and creating the surface on which natural fibers are oriented in one direction
- creating simultaneously a second surface with randomly oriented natural fibers on the surface with unidirectionally oriented natural fibers, by random spattering of the natural fibers and/or the natural fibers and the powder and/or fiber form of thermoplastic polymer on the surface where the natural fibers are oriented in one direction by side by side arrangement of special design yarns thermal processing of the surface with unidirectionally oriented natural fibers and the second surface with randomly oriented natural fibers on it together
- wrapping the unidirectional thermoplastic prepreg structures containing reciprocal surfaces/faces, wherein one surface includes uni-directionally oriented natural fibers and the other surface includes randomly oriented natural fibers

The yarns include natural fibers comprising one or more of flax, hemp, ramie, jute and sisal fibers. The fiber length of the invention is between 30 mm and 750 mm, preferably with a length of 100 mm to 250 mm. The reinforcing natural fibers may be in raw form or may be modified with physicochemical methods to facilitate its bonding with the multifilament form of thermoplastic polymer to create the matrix. The natural fibers do not contain twist, and are directed parallel to the axis of the natural fiber containing yarns.

The natural fibers to be scattered randomly on the surface created by bringing the yarns side by side may contain one or more of flax , hemp, ramie and sisal fibers, and the fiber length may vary between 10 mm and 100 mm. The thermoplastic polymer in the form of fiber and/or powder to be randomly distributed on the surface created by bringing yarns side by side, may contain any one or more of polypropylene, polyethylene, terephthalate, polybutylene terephthalate, and polyamide polymers.

The thermoplastic polymer in the form of a multifilament that constitutes the matrix may contain one or more of polypropylene, polyethylene, polyethylene terephthalate, polybutylene terephthalate, and polyamide polymers. The thermoplastic polymer in the form of a multifilament that constitutes the matrix may contain filaments in a number between 100 and 2000. Copolymer may be added to to the multifilament form of thermoplastic polymer to facilitate bonding with the reinforcing natural fibers during prepreg production.

For yarns with natural fibers content; the ratio of natural fibers by weight is between 30% and 70%, and the preferred rate for natural fibers is 50%. In the yarns with natural fibers, the ratio of the multifilament form of thermoplastic polymer by weight is between 30% and 70%, and the preferred rate for multifilament form of thermoplastic polymer is 50%.

The ratio of the natural fibers and/or natural fibers and powder and/or filament form of thermoplastic polymer to be scattered randomly on the surface made of natural fibers containing yarns by weight in the prepreg structure varies between 10% and 50%, and it is preferably 20%.

The invented method provides the following advantages compared to the prior art:
- In the prior art, the process to produce prepreg with two different surfaces (one face contains unidirectional fibers and the other face randomly scattered fibers) is carried out in 3 steps, while the steps of (i) production of unidirectional prepreg structure (ii) production of nonwoven, (mat) surface and (iii) bonding these two structures, whereas with the invention the production of the nonwoven (mat) surface at once is totally eliminated, and it is produced in one step simultaneously during the production of the unidirectional prepreg structure.
- In the prior art, various techniques such as needle punching were used to fix the randomly oriented fiber for the production of the nonwoven (mat) surface. However herein, as the randomly oriented natural fibers are already fixed on the surface made of yarns arranged side by side without any space in-between, and can be transported to the production line with that surface, the production of nonwoven (mat) surface with an extra needle punching method to fix the randomly oriented natural fibers becomes unnecessary.The invented method eliminates the need for the steps of forming a nonwoven (mat) surface made of the randomly scattered natural fibers fixed via the needle punching method in general, and bonding said nonwoven (mat) surface with previously produced natural fiber containing unidirectional thermoplastic prepreg structures to obtain unidirectional thermoplastic prepreg structures containing reciprocal surfaces/faces, wherein one surface includes unidirectionally oriented natural fibers and the other surface includes randomly oriented natural fibers.
- The invented product and method enable producing natural fiber-reinforced unidirectional prepreg structures, without requiring to use the natural fibers in card web form, and without requiring the additional chemical processes to fix the card web and without requiring to use non-crimp fabric form of natural fibers and the additional weaving and/or stitching process applied for it.

## Claims

1. A production method of unidirectional thermoplastic prepreg (36) structures containing opposing surfaces, wherein one surface includes uni-directionally oriented natural fibers (11) and the other surface includes randomly oriented natural fibers (11), comprising the steps of;
• arranging yarns (31), having a structure in which an untwisted ribbon form of reinforcing natural fibers (11) and a multifilament form of thermoplastic polymer (12) to create a matrix are positioned in parallel and are located together in the center of the yarn (31) and are wrapped with thermoplastic polymer in the form of the multifilament (12) to create the matrix, side by side without leaving space between them by means of a yarn feeder and creating the surface of the unidirectionally oriented natural fibers of the prepreg structure,
• creating simultaneously a second surface with randomly oriented natural fibers on the surface with unidirectionally oriented natural fibers, by random spattering (33) of natural fibers or of natural fibers with thermoplastic polymer in the form of powder and/or fiber on the surface of unidirectionally oriented natural fibers obtained by the side-by-side arrangement of yarns,
• thermal processing of the surface with unidirectionally oriented natural fibers and the second surface with randomly oriented natural fibers on it together.

2. A unidirectional thermoplastic prepreg produced by the method according to Claim 1, wherein one of the opposing surfaces contains unidirectionally oriented natural fibers and the other contains randomly scattered natural fibers.

3. A prepreg according to Claim 2, **characterized in that** the natural fibers that form the yarns and/or the natural fibers that form the reinforcing material comprise any of flax, hemp, ramie and sisal fibers or a combination thereof.

4. A prepreg according to Claim 2, **characterized in that** the length of natural fibers in the yarn is between 30 mm and 750 mm.

5. A prepreg according to Claim 2, **characterized in that** the ratio of natural fibers in the yarn is 30% to 70% by weight.

6. A prepreg according to Claim 5, **characterized in that** the ratio of natural fibers in the yarn is 50%.

7. A prepreg according to Claim 2, **characterized in that** the length of the natural fibers of the reinforcing material is between 10 mm and 100 mm.

8. A prepreg according to Claim 2, **characterized in that** the reinforcing natural fibers are oriented in parallel to the axis of the yarns that contain natural fibers.

9. A prepreg according to Claim 2, **characterized in that** the ratio of the reinforcing natural fibers is between 10% and 50% by weight.

10. A prepreg according to Claim 9, **characterized in that** the ratio of the reinforcing natural fibers is 20% by weight.

11. A prepreg according to Claim 2, **characterized in that** the thermoplastic polymer in the form of multifilament or the thermoplastic polymer as reinforcing material comprises one or more of polypropylene, polyethylene, polyethylene terephthalate, polybutylene terephthalate, and polyamide polymers or a combination thereof.

12. A prepreg according to Claim 11, **characterized in that** the thermoplastic polymer in the form of multifilament comprises 100 to 2000 filaments.

13. A prepreg according to Claim 11, **characterized in that** the thermoplastic polymer in the form of multifilament comprises a copolymer during filament production to facilitate its bonding to the natural fibers.

14. A prepreg according to Claim 11, **characterized in that** the ratio of thermoplastic polymer in the form of multifilament or the thermoplastic polymer as reinforcing material is between 30% and 70% by weight.

15. A prepreg according to Claim 14, **characterized in that** the ratio of the thermoplastic polymer in the form of multifilament or the thermoplastic polymer as reinforcing material is 50% by weight.

16. A yarn (31) comprising both an untwisted ribbon form of reinforcing natural fibers (11) positioned in parallel and a multifilament form of a thermoplastic polymer (12) to create a matrix and wherein the untwisted ribbon form of the reinforcing natural fibers and multifilament form of a thermoplastic polymers are located together in the center and wrapped with a multifilament form of the thermoplastic polymer.

17. A prepreg surfacing material for unidirectional thermoplastic prepreg (36) structures having unidirectionally oriented natural fibers, and constituted of the yarns of claim 16, arranged side by side without leaving space between them.

## Patentansprüche

1. Verfahren zur Herstellung von unidirektionalen thermoplastischen Prepreg-Strukturen (36) mit gegenüberliegenden Oberflächen,
wobei eine Oberfläche unidirektional orientierte Naturfasern (11) und die andere Oberfläche zufällig orientierte Naturfasern (11) umfasst, umfassend die folgenden Schritte;
• Anordnen von Garnen (31), die eine Struktur aufweisen, bei der eine ungezwirnt Bandform von verstärkenden Naturfasern (11) und eine Multifilamentform eines thermoplastischen Polymers (12) zur Erzeugung einer Matrix parallel positioniert sind und zusammen in der Mitte des Garns (31) liegen und mit thermoplastischem Polymer in der Form des Multifilaments (12) umwickelt sind, um die Matrix zu erzeugen, nebeneinander, ohne dass ein Raum dazwischen verbleibt, mittels einer Gamzuführung und Erzeugen der Oberfläche der unidirektional orientierten Naturfasern der Prepreg-Struktur,
• Erzeugen einer zweiten Oberfläche mit zufällig orientierten Naturfasern gleichzeitig auf der Oberfläche mit unidirektional orientierten Naturfasern durch zufälliges Aufstreuen (33) von Naturfasern oder Naturfasern mit thermoplastischem Polymer in Form des Pulvers und/oder der Faser auf der Oberfläche der unidirektional orientierten Naturfasern, die durch das Anordnen der Garne nebeneinander erhalten werden,
• thermische Behandlung der Oberfläche mit unidirektional orientierten Naturfasern und der zweiten Oberfläche mit zufällig darauf orientierten Naturfasern zusammen.

2. Unidirektionales thermoplastisches Prepreg, hergestellt nach dem Verfahren gemäß Anspruch 1, wobei eine der gegenüberliegenden Oberflächen unidirektional orientierte Naturfasern und die anderen zufällig verstreuten Naturfasern enthält.

3. Prepreg nach Anspruch 2, **dadurch gekennzeichnet, dass** die Naturfasern, die die Garne bilden, und/oder die Naturfasern, die das Verstärkungsmaterial bilden, irgendwelche Flachs-, Hanf-, Ramie- und Sisalfasern oder eine Kombination davon umfassen..

4. Prepreg nach Anspruch 2, **dadurch gekennzeichnet, dass** die Länge der Naturfasern im Garn zwischen 30 mm und 750 mm beträgt.

5. Prepreg nach Anspruch 2, **dadurch gekennzeichnet, dass** das Verhältnis von Naturfasern im Garn 30 Gew.-% bis 70 Gew.-% beträgt.

6. Prepreg nach Anspruch 5, **dadurch gekennzeichnet, dass** das Verhältnis von Naturfasern im Garn 50% beträgt.

7. Prepreg nach Anspruch 2, **dadurch gekennzeichnet, dass** die Länge der Naturfasern des Verstärkungsmaterials zwischen 10 mm und 100 mm beträgt.

8. Prepreg nach Anspruch 2, **dadurch gekennzeichnet, dass** die verstärkenden Naturfasern parallel zur Achse der Garne, die Naturfasern enthalten, orientiert sind.

9. Prepreg nach Anspruch 2, **dadurch gekennzeichnet, dass** das Verhältnis der verstärkenden Naturfasern zwischen 10 und 50 Gew.-% beträgt.

10. Prepreg nach Anspruch 9, **dadurch gekennzeichnet, dass** das Verhältnis der verstärkenden Naturfasern 20 Gew.-% beträgt.

11. Prepreg nach Anspruch 2, **dadurch gekennzeichnet, dass** das thermoplastische Polymer in Form eines Multifilaments oder das thermoplastische Polymer als Verstärkungsmaterial eines oder mehrere der Polymere Polypropylen, Polyethylen, Polyethylenterephthalat, Polybutylenterephthalat und Polyamid oder eine Kombination davon umfasst.

12. Prepreg nach Anspruch 11, **dadurch gekennzeichnet, dass** das thermoplastische Polymer in Form eines Multifilaments 100 bis 2000 Filamente umfasst.

13. Prepreg nach Anspruch 11, **dadurch gekennzeichnet, dass** das thermoplastische Polymer in Form eines Multifilaments bei der Herstellung des Filaments ein Copolymer enthält, um seine Bindung an Naturfasern zu erleichtern.

14. Prepreg nach Anspruch 11, **dadurch gekennzeichnet, dass** das Verhältnis des thermoplastischen Polymers als Multifilament oder des thermoplastischen Polymers als Verstärkungsmaterial zwischen 30 und 70 Gew.-% beträgt.

15. Prepreg nach Anspruch 14, **dadurch gekennzeichnet, dass** das Verhältnis des thermoplastischen Polymers in Form eines Multifilaments oder des thermoplastischen Polymers als Verstärkungsmaterial 50 Gew.-% beträgt.

16. Garn (31), das sowohl eine ungezwirnte Bandform von parallel positionierten verstärkenden Naturfasern (11) als auch eine Multifilamentform eines thermoplastischen Polymers (12) zur Erzeugung einer Matrix umfasst, und wobei die ungedrehte Bandform der verstärkenden Naturfasern und die Multifilamentform eines thermoplastischen Polymers zusammen in der Mitte liegen und mit einer Multifilamentform des thermoplastischen Polymers umwickelt sind.

17. Prepreg-Oberflächenmaterial für unidirektionale thermoplastische Prepreg-Strukturen (36) mit unidirektional orientierten Naturfasern und bestehend aus Garnen nach Anspruch 16, die nebeneinander angeordnet sind, ohne dass ein Raum dazwischen verbleibt.

## Revendications

1. Procédé de production de structures préimprégnées thermoplastiques unidirectionnelles (36) contenant des surfaces opposées,
dans lequel une surface comprend des fibres (11) naturelles orientées de manière unidirectionnelle et l'autre surface comprend des fibres (11) naturelles orientées de manière aléatoire, comprenant les étapes consistant à ;
• agencer des fils (31), ayant une structure dans laquelle une forme de ruban non torsadé de fibres (11) naturelles de renforcement et une forme de multifilament de polymère thermoplastique (12) pour créer une matrice sont positionnées en parallèle et sont situées ensemble au centre du fil (31) et sont enveloppées avec un polymère thermoplastique (12) sous la forme du multifilament pour créer la matrice, côte à côte sans laisser d'espace entre elles au moyen d'un dispositif d'alimentation en fil et créer la surface des fibres naturelles orientées de manière unidirectionnelle de la structure préimprégnée,
• créer simultanément une seconde surface avec des fibres naturelles orientées de manière aléatoire sur la surface avec des fibres naturelles orientées de manière unidirectionnelle, par la dispersion aléatoire (33) de fibres naturelles ou de fibres naturelles avec un polymère thermoplastique sous forme de poudre et/ou de fibre sur la surface des fibres naturelles orientées de manière unidirectionnelle obtenues par l'agencement côte à côte des fils,
• traiter thermique la surface avec des fibres naturelles orientées de manière unidirectionnelle et de la seconde surface avec des fibres naturelles orientées de manière aléatoire sur celle-ci ensemble.

2. Préimprégné thermoplastique unidirectionnel produit par le procédé selon la revendication 1, dans lequel l'une des surfaces opposées contient des fibres naturelles orientées de manière unidirectionnelle et l'autre contient des fibres naturelles dispersées de manière aléatoire.

3. Préimprégné selon la revendication 2, **caractérisé en ce que** les fibres naturelles qui forment les fils et/ou les fibres naturelles qui forment le matériau de renforcement comprennent l'une quelconque des fibres de lin, de chanvre, de ramie et de sisal ou une combinaison de celles-ci.

4. Préimprégné selon la revendication 2, **caractérisé en ce que** la longueur des fibres naturelles dans le fil est comprise entre 30 mm et 750 mm.

5. Préimprégné selon la revendication 2, **caractérisé en ce que** le rapport de fibres naturelles dans le fil est de 30% à 70% en poids.

6. Préimprégné selon la revendication 5, **caractérisé en ce que** le rapport de fibres naturelles dans le fil est de 50%.

7. Préimprégné selon la revendication 2, **caractérisé en ce que** la longueur des fibres naturelles du matériau de renforcement est comprise entre 10 mm et 100 mm.

8. Préimprégné selon la revendication 2, **caractérisé en ce que** les fibres naturelles de renforcement sont orientées parallèlement à l'axe des fils qui contiennent des fibres naturelles.

9. Préimprégné selon la revendication 2, **caractérisé en ce que** le rapport des fibres naturelles de renforcement est compris entre 10% et 50% en poids.

10. Préimprégné selon la revendication 9, **caractérisé en ce que** le rapport des fibres naturelles de renforcement est de 20% en poids.

11. Préimprégné selon la revendication 2, **caractérisé en ce que** le polymère thermoplastique sous forme de multifilament ou le polymère thermoplastique comme matériau de renforcement comprend un ou plusieurs des polymères polypropylène, polyéthylène, polyéthylène téréphtalate, polybutylène téréphtalate et polyamide ou une combinaison de ceux-ci.

12. Préimprégné selon la revendication 11, **caractérisé en ce que** le polymère thermoplastique sous forme de multifilament comprend 100 à 2000 filaments.

13. Préimprégné selon la revendication 11, **caractérisé en ce que** le polymère thermoplastique sous forme de multifilament comprend un copolymère pendant la production du filament pour faciliter sa liaison aux fibres naturelles.

14. Préimprégné selon la revendication 11, **caractérisé en ce que** le rapport entre le polymère thermoplastique sous forme de multifilament ou le polymère thermoplastique comme matériau de renforcement est compris entre 30% et 70% en poids.

15. Préimprégné selon la revendication 14, **caractérisé en ce que** le rapport du polymère thermoplastique sous forme de multifilament ou du polymère thermoplastique comme matériau de renforcement est de 50% en poids.

16. Fil (31) comprenant à la fois une forme de ruban non torsadé de fibres (11) naturelles de renforcement positionnées en parallèle et une forme de multifilament d'un polymère thermoplastique (12) pour créer une matrice et dans lequel la forme de ruban non torsadé des fibres naturelles de renforcement et la forme de multifilament d'un polymère thermoplastique sont situées ensemble au centre et enveloppées avec une forme de multifilament du polymère thermoplastique.

17. Matériau de revêtement préimprégné pour structures préimprégnées thermoplastiques unidirectionnelles (36) ayant des fibres naturelles orientées de manière unidirectionnelle, et constitué des fils de la revendication 16 disposés côte à côte sans laisser d'espace entre elles.
